# EUROPEAN PATENT SPECIFICATION

(11) **EP 1 196 487 B1**
(45) Date of publication and mention of the grant of the patent: **04.01.2006**
(21) Application number: 99926198.5
(22) Date of filing: 24.06.1999
(51) Int. Cl.: C08J 9/33, C08L 75/04

(54) **A BONDED FOAM AND A PROCESS FOR THE PRODUCTION THEREOF**
GEBUNDENER SCHAUM UND HERSTELLUNGSVERFAHREN DAFÜR
MOUSSE AGGLOMEREE ET PROCEDE DE PRODUCTION DE LADITE MOUSSE

(43) Date of publication of application: 17.04.2002
(73) Proprietor: RECTICEL, 1200 Brussels (BE)
(72) Inventor: VAN DER MEULEN, Inge, B-9230 Wetteren (BE); KAMPRATH, Axel, B-9230 Wetteren (BE)
(74) Representative: Van Reet, Joseph
(86) International application number: PCT/BE1999/000082
(87) International publication number: WO 2001/000718

(56) References cited:
- DE-C- 4 313 781
- FR-A- 2 097 144

## Description

The present invention relates to a bonded foam comprising a plurality of isocyanate-based polymeric foam particles, in particular polyurethane foam particles, bonded to one another by means of an isocyanate based binder, and at least one water-repellent additive. The invention also relates to a process for the production of such a bonded foam.

Bonding any kind of polymeric foam is well known as method for recycling and reuse of foams. The density ranges from about 30 kg/m³ to more than 450 kg/m³, where lower densities are suitable for cushioning in the furniture and bedding industry, for mattresses, for applications in the agricultural area and many more. Higher densities (> 250 kg/m³) are being applied preferably for all kinds of floor applications like for instance underlays for parquet, PVC tiles and ceramic tiles.

DE-C-43 13 781 discloses a bonded foam which is used as sound insulation or filling material in automobiles. In the examples, the density of this bonded foam is comprised between 80 and 140 kg/m³. For reducing the moisture absorption of the bonded foam, about 8 % by weight of a wax, in particular Hoechstwax E, is mixed with the foam flocks after having applied the prepolymer binder thereto. The addition of this wax resulted in a decrease of the water absorption in a test wherein a small block of the bonded foam is placed under an inclination of 30 degrees and wherein every 3 seconds a drop of water is applied, during a period of 3 minutes, on top of the block. Compared to the French standard UEAtc H.1 MOD1 discussed hereafter, the test applied in DE-C-43 13 781 is less severe in view of the short contact time and the small contact surface between the drops and the top of the foam block. A drawback of the method disclosed in DE-C-43 13 781 is further that by the addition of 8 % wax, the compression hardness as well as the tear resistance and the elongation at break are reduced.

Bonded foams put on the market before the present invention and having a density higher than the bonded foams disclosed in DE-C-43 13 781, more particularly in the range of typically 250 to 400 kg/m³ do not contain a water-repellent additive and can absorb up to 250 % at 2 mm thickness (> 1000 g/m² according to UEAtc H.1) of water, depending on the composition, the nature of the foam, the nature and concentration of the binder and the presence of other solid constituents. The lower the density, the higher the water absorption under comparable conditions.

Those bonded foams are not suitable for parquet underlays or underlays for PVC- or ceramic tiles under moist conditions like in kitchens or bathrooms or in other applications where floors are cleaned by means of water.

The object of the present invention is therefore to provide a bonded foam which comprises a water-repellent additive which is more effective than the wax used in DE-C-43 13 781 and which can be used under moist conditions and a process for the production of such a bonded foam.

To this end, the bonded foam according to the invention has a water uptake, determined at 25 °C in accordance with the French standard UEAtc H.1 MOD1, of maximum 180 g/m² and said water-repellent additive comprises a fluorochemical dispersion. The process according to the invention is characterised in that at least one water-repellent additive, which comprises a fluorochemical dispersion, is incorporated into the bonded foam in such an amount that the bonded foam has a water uptake, determined at 25 °C in accordance with the French standard UEAtc H.1 MOD1, of maximum 180 g/m².

It has been found that, notwithstanding the fact that the foam particles from which the bonded foam is made are usually quite hydrophilic, the water uptake of the bonded foam can be reduced to the indicated values by incorporating a water-repellent additive comprising a fluorochemical dispersion therein.

In a preferred embodiment, said water-repellent additive is applied onto the surface of the polymeric foam particles so that these foam particles are at the most only partially impregnated with the water-repellent additive.

It has indeed been found surprisingly that the polymeric foam particles do not have to be impregnated entirely with the water-repellent additive in order to reduce the water uptake of the bonded foam to the indicated values. In this preferred embodiment, the production costs are considerably reduced. Moreover, it enables the use of solid, in particular powdery or granular water-repellent additives. Even in this latter case, the water uptake could be reduced to the indicated values, notwithstanding the fact that the surfaces of the foam particles, in particular the inner surfaces thereof, are certainly not entirely coated with the water-repellent additive.

In a further preferred embodiment, said water-repellent additive further comprises a wax or wax emulsion, and/or a siloxane emulsion, the water-repellent additive preferably further comprises a wax.

Other particularities and advantages of the invention will become apparent from the following description of some particular embodiments of the bonded foam and of the process for the production thereof according to the present invention. This description is only given by way of illustrative example and is not intended to limit the scope of protection.

The bonded foam according to the present invention is made from isocyanate-based polymeric foam particles as main starting material. These foam particles are in particular polyurethane (ether or ester), polyurea or polyurea modified polyurethane foam particles. Usually they have a hydrophilic character but in some rare cases they may already contain a water-repellent additive incorporated therein during the foaming process of the prime foam material.

For producing the bonded foam, an isocyanate based binder , having free NCO groups, is applied onto the foam particles. This is usually done by spraying while agitating the foam particles. The foam particles are then preferably vigorously mixed and transferred into a mould wherein they are compressed and wherein the binder is reacted with an NCO groups reactive compound to bond the foam particles to one another to form the rebonded foam. This can be done by means of steam, superheated steam, hot gases or just by curing at ambient temperature.

The bonded foam is then demoulded, postcured and dried in the usual way. The obtained blocks can be cut into the desired shapes, in particular into blocks, plates, sheets or other geometrical shapes. The bonded foam may be used for different applications, in particular for floor or similar applications. For these latter applications, the foam particles are preferably compressed in such a manner that the produced bonded foam has a density of between 150 and 450 kg/m³ and most preferably a density of between 200 and 450 kg/m³.

In order to modify the properties of the produced bonded foam, use can further be made of solid fillers or other modifiers. These solid fillers may comprise for example rubber or other elastomeric particles such as elastomeric polyurethane particles or possibly chopped textile fibres and/or cork powder as well. They are preferably mixed with the foam particles before applying the binder thereto. The elastomeric particles have preferably a diameter of between 0.05 and 2 mm and most preferably a diameter smaller than 1 mm. The cork powder has preferably a diameter of between 2 and 5 mm and most preferably a particle size of about 3 mm.

The binder used in the process according to the invention may be a binder system formed by a reaction mixture comprising an isocyanate and an active hydrogen containing compound like a polyol. On the other hand, it may also be formed by a prepolymer containing still some free NCO groups which may be cured in particular in the presence of water or water vapour.

The foam particles used in the process according to the present invention are either chopped flocks or cut pieces. Starting from such foam particles, the above described process allows to produce a bonded foam which is especially suited for floor or analogous applications and which has, as already mentioned here above, for example a density of 150 to 450 kg/m³. Due to the hydrophilic character of the used foam particles, the obtained bonded foam has however still much too high water uptake capabilities.

In order to solve this problem, at least one water-repellent additive which comprises a fluorochemical dispersion is incorporated according to the invention into the bonded foam, more particularly in such an amount that the bonded foam has a water uptake, determined at 25 °C in accordance with the French standard UEAtc H.1 MOD1, of maximum 180 g/m².

The water-repellent additive may be incorporated into the bonded foam once it has been demoulded or once it has been cut further into pieces of the desired dimensions. Tests have for example been carried out wherein the bonded foam was drenched in the water-repellent additive and wherein the excess of additive was subsequently squeezed out.

In the method according to the invention preference is however given to incorporating the water-repellent additive into the bonded foam during the production thereof, more particularly before the foam particles are bonded to one another. This can be done in different ways:
- The water-repellent additive may be admixed to the binder before applying this binder to the foam particles;
- In case the water-repellent additive is in liquid form, it can be sprayed onto the foam particles, more particularly before or after applying the binder to these particles and/or even simultaneously thereto; and
- In case the water-repellent additive is in solid form, it can be mixed with the foam particles, preferably before having applied the binder thereto so that a homogeneous mixture can more easily be obtained.

It should be noted that some water-repellent additives are not liquid as such but can be brought into a liquid form by making an emulsion or a dispersion thereof in a solvent or possibly by dissolving them.

In case solid water-repellent additives are applied in the process according to the invention, it is clear that such additives are only applied onto the surface of the foam particles so that these particles are not impregnated therewith. It has been found however that the foam particles do not have to be impregnated with the water-repellent additive in order to reduce the water uptake of the bonded foam.

Consequently, in a preferred embodiment of the invention, the water-repellent additive is applied also onto the surface of the polymeric foam particles in case the additive is in liquid form so that these foam particles are at the most only partially impregnated with the water-repellent additive. This makes the process according to the invention more economically feasible and reduces in particular the production time and costs. Indeed, the water-repellent additive can in this way simply be sprayed onto the foam particles, preferably while these particles are being stirred.

Moreover, the water-repellent additive may thus also be added to the binder notwithstanding the fact that this binder may not entirely impregnate the foam particles since otherwise the foam properties would be lost. In conventional processes for making materials such as textile materials water-repellent, however, for example in the process disclosed in US-A-3 950 298, the material is completely drenched with an organic solution of the additive so that the water-repellent additive is widely spread onto the inner surface of the textile material and exceeding additive is then squeezed out.

In the process according to the invention, the foam particles have preferably a diameter of between 2 and 20 mm. Most preferably, the foam particles have a diameter of 3 to 5 mm. With these latter sizes of the foam particles, the water-uptake of the bonded foam can be reduced optimally whilst the foam properties are still maintained.

In the process or bonded foam according to the invention, the water-repellent additive comprises a fluorochemical dispersion, optionally in combination with a wax or wax emulsion and/or a siloxane emulsion.

When the additive is water-based, one would expect that the quality of the bonded foam would be adversely affected in view of the fact that the NCO-groups of the binder react rather fast with water. However, it has been found quite unexpectedly that the use of a prepolymer instead of a pure isocyanate binder or even an in situ prepolymer (allowing the reaction mixture to react on the foam particles before spraying the water-repellent additive thereon) enables to obtain a good bonding and a good water-repellency at the same time.

Specific water-repellent additives which can be used are :

### 1. Montanwax

A typical example thereof is "Hoechstwax E Pulver Fein" (trademark), a product of Hoechst. This solid product is an ester of montanic acids derived from the oxidative refining of crude montan wax that is extracted from brown coal.
These waxes are used as lubricants and internal release agents for the processing of polyvinyl chloride, polyolefins, polyamide, polystyrene, linear polyesters, thermoplastic polyurethanes, etc.

### 2. Fluorochemical dispersions

Several fluorochemicals have been evaluated. The best results were obtained with the fluorochemical "FC-251" of 3M. It is a fluorochemical emulsion that contains 28% of active solids. These active solids are described as a "fluoroalkylcopolymer".
The product is used to confer oil and water repellency to fabrics made from natural or synthetic fibers. The emulsion is usually applied by padding on mill pad equipment.
Other trade names of fluorochemical emulsions that have been evaluated and found to be suitable are : FC-3540 (3M), FC-3581 (3M), FC-3551 (3M), FC-3531 (3M), Foraperle 351 (Elf Atochem).

### 3. Polytetrafluoroethylene

An example hereof is "Ceridust 9205 F" produced by the company Hoechst. This ceridust micropowder is a low molecular weight polytetrafluorethylene.
In the known applications the product is incorporated by stirring in paints and coatings, and provides antisticking properties and related surface effects.

### 4. Siloxane emulsions

Tradenames of some typical examples are "BYK LPX 6162" of BYK Chemie and "Tegosivin HE 503" of Goldschmidt. The former is a polyether modified dimethylpolysiloxane, the latter a modified reactive siloxane emulsion water-based.
These additives are usually used in the paint industry. They provide more permanent surface properties such as improved solvent and weather resistance, less dirt retention, etc.

### 5. PE waxes

A typical example is "Ceraflour 990" a trademark of BYK Chemie. The product is a micronized polyethylene wax that is used to improve the surface properties of coatings and printing inks.

### 6. Al-, Zn- and Zr-compounds

An example hereof is LEFASOL VH1 of LEFATEX-CHEMIE GmbH. A test was done wherein 500 g/I of this product was mixed in water and a bonded polyurethane foam was impregnated therewith: Excess of liquid was squeezed out. The water uptake of the bonded foam could be reduced in this way until just below 500 g/m².

### Examples 2 and 4 and comparative examples 1, 3, 5 and 6

In these examples irregular foam particles obtained by chopping a polyether polyurethane foam, having a density of about 30 kg/m³ were used as starting material. The chopped particles had a diameter of about 3 mm. They were mixed with a rubber granulate in a mixer until a homogeneous mix was achieved.

The rubber granulate was comprised of rubber particles having a diameter ranging between 0.1 and 0.6 mm. In case use was made of a solid water-repellent additive, this additive was also mixed first with the foam particles. Then the binder was sprayed onto the solid particles while stirring them. When use was made of a liquid water-repellent additive, this was subsequently sprayed on the solid particles still while stirring them. As binder, use was made of a polyurethane prepolymer binder based on a mixture of 2,4- and 2,6-toluene-diisocyanate and a polyether polyol.

After some additional mixing, the constituents were transferred into a mould (l x w x h = 300 x 300 x 600 mm). The top lid of the mould was closed and the components were compressed to the required density. The top lid was more particularly fixed in a height of 72 mm above the bottom plate of the mould. The reaction of the binder was obtained by pressing superheated steam through the perforated bottom of the mould for about 8 minutes. The bonded foam block was demoulded and allowed to dry and postcure for 24 hours. Out of those blocks suitable samples were cut out, more particularly sheets having a thickness of about 2.5 mm, and the water-uptake was measured by the following method :

### Test method UEAtc H.1

This testmethod is used to measure the increase in weight of a sample that is in contact with a humid support.

During the test, a sample is for minimal 60 and maximal 63 minutes positioned on a humid capillary taper , in particular into neutral paper, type "Kleenex". Before starting the test, this capillary taper is completely saturated with a liquid that contains demineralized water to which 1.5 % of a solution consisting of demineralized water and 2 % pure Teepol, a liquid soap, is added. In order to obtain a constant flow of the liquid, the weight of the taper should be kept constant at 17 g/dm². Dimensions of the taper must be at least 210 x 210 mm. Air bubbles underneath or folds in the capillary taper must be avoided.

The taper is positioned on a stiff, flat, non-absorbing support. Dimensions of the support and the sample are identical: 150 x 150 mm. In order to keep the taper sufficiently impregnated, the support is positioned in a bin containing the liquid up to a level which is 3 to 5 mm lower than the upper surface of the support.

On top of the sample an upper plate is put. This upper plate must have a weight of 150 g ± 15 g and dimensions of 147 x 147 mm.

The weight of each sample is then determined in dry and wet condition. The increase in weight is calculated and expressed in g/m². For each evaluated fomnulation, 4 individual samples are tested. The highest uptake in g/m² is reported.

Although the thickness of the sample is not specified in the original test method and although a sample with a higher thickness has a higher initial possibility to absorb a higher amount of liquid, comparitive tests have shown that thickness variations, in particular a reduction of the thickness to 1.8 mm, have substantially no influence on the test results when the water-uptake is within the claimed range.

The results of the tests performed in the different examples 1 to 6 are given in the table below.

| **Ex.** | **Density** | **PU foam** | **Rubber** | **Prepolymer** | **Waterrepellent additive** | | **Waterabsorption** |
|---|---|---|---|---|---|---|---|
| | kg/m³ | % | % | % | % | name | g/m² |
| 1 | 300 | 66 | 18 | 16 | 5 | Montanwax (Hoechstwax) | 176 |
| 2 | 300 | 66 | 18 | 16 | 0.5 | FC-251 + montanwax | 82 |
| | | | | | 4.5 | | |
| 3 | 300 | 66 | 18 | 16 | 5 | Ceridust 9205 F | 484 |
| 4 | 350 | 66 | 18 | 16 | 5 | FC-251 | 41 |
| 5 | 350 | 66 | 18 | 16 | 5 | TEGOSIVIN HE503 | 172 |
| 6 | 250 | 66 | 18 | 16 | 0.5 | BYK LPX 6162 + Ceraflour 990 | 172 |
| | | | | | 4.5 | | |

Since an essential feature of the invention is that the water-repellent additive comprises a fluorochemical dispersion, only Examples 2 and 4 are in accordance with the present invention. From the above table it appears that the water-uptake from the bonded foam can be reduced by means of a solid water-repellent additive, more particularly by powdery montanwax, notwithstanding the fact that such an additive does not penetrate into the foam particles itself (see Example 1). By applying the method according to the invention, in particular by replacing a small portion of the wax with a fluorochemical emulsion, a significant further reduction of the water-uptake can however be obtained (see Example 2). An even larger reduction of the water-uptake can be obtained by using only a fluorochemical emulsion as water-repellent additive. This appears from Example 4, although the water-uptake is also somewhat reduced therein by the higher foam density.

From the above description of some particular embodiments of the bonded foam and the process according to the invention, it will be clear that many modifications can be applied thereto without departing from the scope of the invention as defined in the appended claims.

In particular, it is possible to add all kinds of further additives to the bonded foam, in particular biocidic agents which protect the bonded foam against biological deteriorations when the bonded foam is subjected to humid conditions.

## Claims

1. A bonded foam comprising a plurality of isocyanate-based polymeric foam particles, in particular polyurethane foam particles, bonded to one another by means of an isocyanate based binder, and at least one water-repellent additive, **characterised in that** the bonded foam has a water uptake, determined at 25 °C in accordance with the French standard UEAtc H.1 MOD1, of maximum 180 g/m² and said water-repellent additive comprises a fluorochemical dispersion.

2. The bonded foam according to claim 1, **characterised in that** said water-repellent additive is applied onto the surface of said foam particles so that these foam particles are at the most only partially impregnated with the water-repellent additive.

3. The bonded foam according to claim 1 or 2, **characterised in that** said water-repellent additive further comprises a wax or wax emulsion and/or a siloxane emulsion, in particular a wax.

4. The bonded foam according to any one of the claims 1 to 3, **characterised in that** it further comprises elastomeric particles, in particular rubber and/ or elastomeric polyurethane particles, which particles have preferably a diameter of 0.05 to 2 mm and most preferably a diameter smaller than 1 mm.

5. The bonded foam according to any one of the claims 1 to 4, **characterised in that** it further comprises a filler material, in particular cork powder and/or textile fibres.

6. The bonded foam according to any one of the claims 1 to 5, **characterised in that** it contains a biocidic agent.

7. The bonded foam according to any one of the claims 1 to 6, **characterised in that** it has a density of between 150 and 450 kg/m³ and preferably of between 200 and 450 kg/m³.

8. A process for the production of a bonded foam according to any one of the claims 1 to 7, wherein an isocyanate based binder, having free NCO groups, is applied onto a plurality of isocyanate-based polymeric foam particles, the foam particles having the binder applied thereon are compressed, and the binder is reacted with an NCO groups reactive compound to bond the foam particles to one another, **characterised in that** at least one water-repellent additive which comprises a fluorochemical dispersion is incorporated into the bonded foam in such an amount that the bonded foam has a water uptake, determined at 25 °C in accordance with the French standard UEAtc H.1 MOD1, of maximum 180 g/m².

9. The process according to claim 8, **characterised in that** said water-repellent additive is applied onto the surface of the polymeric foam particles so that these foam particles are at the most only partially impregnated with the water-repellent additive.

10. The process according to claim 8 or 9, **characterised in that** said water-repellent additive is admixed to the binder before applying this binder to the foam particles.

11. The process according to any one of the claims 8 to 10, **characterised in that** said water-repellent additive is sprayed in liquid form onto the foam particles before after and/or simultaneously to applying the binder thereto.

12. The process according to any one of the claims 8 to 11, **characterised in that** said water-repellent additive further comprises a wax or wax emulsion and/or a siloxane emulsion, in particular a wax.

13. The process according to any one of the claims 8 to 12, **characterised in that** use is made of foam particles having a diameter of 2 to 20 mm and preferably of 3 to 5 mm.

14. The process according to any one of the claims 8 to 13, **characterised in that** at least one solid material, in particular a filler material such as cork powder and/or textile fibres and/or an elastomeric material such as rubber and/or elastomeric polyurethane particles, are incorporated in the bonded foam by mixing them with said foam particles, preferably before applying the binder.

15. The process according to any one of the claims 8 to 14, **characterised in that** use is made of foam particles having already a water-repellent additive incorporated therein, which water-repellent additive is either different from or the same as the water-repellent additive which is incorporated in the bonded foam.

16. The process according to any one of the claims 8 to 15, **characterised in that** the isocyanate-based polymeric foam particles are compressed in such a manner that the produced bonded foam has a density of between 150 and 450 kg/m³ and preferably of between 200 and 450 kg/m³.

## Patentansprüche

1. Ein gebundener Schaum, der eine Vielzahl von polymeren Schaumpartikeln auf Isocyanatbasis, insbesondere Polyurethan-Schaumpartikel, durch ein Bindemittel auf Isocyanatbasis aneinander gebunden, und zumindest einen Wasser abweisenden Zusatz enthält, **dadurch gekennzeichnet, dass** der gebundene Schaum eine Wasseraufnahme, bestimmt bei 25°C gemäß der französischen Norm UEAtc H.1 MOD1, von höchstens 180 g/m² hat und dass der erwähnte Wasser abweisende Zusatz eine fluorochemische Dispersion enthält.

2. Der gebundene Schaum nach Anspruch 1, **dadurch gekennzeichnet, dass** der erwähnte Wasser abweisende Zusatz auf die Oberfläche der erwähnten Schaumpartikel aufgebracht wird, sodass diese Schaumpartikel höchstens nur teilweise mit dem Wasser abweisenden Zusatz imprägniert sind.

3. Der gebundene Schaum nach Anspruch 1 oder 2, **dadurch gekennzeichnet, dass** der erwähnte Wasser abweisende Zusatz weiters ein Wachs oder eine Wachsemulsion und/oder eine Siloxanemulsion, insbesondere ein Wachs enthält.

4. Der gebundene Schaum nach einem der Ansprüche 1 bis 3, **dadurch gekennzeichnet, dass** er weiters elastomere Partikel, insbesondere Gummi und/oder elastomere Polyurethanpartikel enthält, wobei diese Partikel vorzugsweise einen Durchmesser von 0,05 bis 2 mm und am besten einen Durchmesser von unter 1 mm haben.

5. Der gebundene Schaum nach einem der Ansprüche 1 bis 4, **dadurch gekennzeichnet, dass** er weiters einen Füllstoff, insbesondere Korkpulver und/oder Textilfasern enthält.

6. Der gebundene Schaum nach einem der Ansprüche 1 bis 5, **dadurch gekennzeichnet, dass** er ein biozides Agens enthält.

7. Der gebundene Schaum nach einem der Ansprüche 1 bis 6, **dadurch gekennzeichnet, dass** er eine Dichte von zwischen 150 und 450 kg/m³ und vorzugsweise von zwischen 200 und 450 kg/m³ hat.

8. Ein Verfahren für die Herstellung eines gebundenen Schaums nach einem der Ansprüche 1 bis 7, bei dem ein Bindemittel auf Isocyanatbasis mit freien NCO-Gruppen auf eine Vielzahl von polymeren Schaumpartikeln auf lsocyanatbasis aufgebracht wird, wobei die Schaumpartikel, auf die das Bindemittel aufgebracht wird, komprimiert werden und das Bindemittel mit einer NCO-Gruppen-reaktiven Verbindung in Reaktion gebracht wird, um die Schaumpartikel aneinander zu binden, **dadurch gekennzeichnet, dass** zumindest ein Wasser abweisender Zusatz, der eine fluorochemische Dispersion enthält, dem gebundenen Schaum in einer solchen Menge zugesetzt ist, dass der gebundene Schaum eine Wasseraufnahme, bestimmt bei 25°C gemäß der französischen Norm UEAtc H.1 MOD1, von höchstens 180 g/m² hat.

9. Das Verfahren nach Anspruch 8, **dadurch gekennzeichnet, dass** der erwähnte Wasser abweisende Zusatz auf die Oberfläche der polymeren Schaumpartikel aufgebracht wird, sodass diese Schaumpartikel höchstens nur teilweise mit dem Wasser abweisenden Zusatz imprägniert sind.

10. Das Verfahren nach Anspruch 8 oder 9, **dadurch gekennzeichnet, dass** der erwähnte Wasser abweisende Zusatz dem Bindemittel zugesetzt wird, bevor dieses Bindemittel auf die. Schaumpartikel aufgebracht wird.

11. Das Verfahren nach einem der Ansprüche 8 bis 10, **dadurch gekennzeichnet, dass** der erwähnte Wasser abweisende Zusatz in flüssiger Form vor, nach und/oder während der Aufbringung des Bindemittels auf die Schaumpartikel auf diese gesprüht wird.

12. Das Verfahren nach einem der Ansprüche 8 bis 11, **dadurch gekennzeichnet, dass** der erwähnte Wasser abweisende Zusatz weiters ein Wachs oder eine Wachsemulsion und/oder eine Siloxanemulsion, insbesondere ein Wachs enthält.

13. Das Verfahren nach einem der Ansprüche 8 bis 12, **dadurch gekennzeichnet, dass** Schaumpartikel verwendet werden, die einen Durchmesser von 2 bis 20 mm und vorzugsweise von 3 bis 5 mm haben.

14. Das Verfahren nach einem der Ansprüche 8 bis 13, **dadurch gekennzeichnet, dass** zumindest ein festes Material, insbesondere ein Füllstoff wie Korkpulver und/oder Textilfasern und/oder ein elastomeres Material wie Gummi und/oder elastomere Polyurethanpartikel, dem gebundenen Schaum zugesetzt werden, indem sie mit den erwähnten Schaumpartikeln, vorzugsweise vor der Aufbringung des Bindemittels, vermischt werden.

15. Das Verfahren nach einem der Ansprüche 8 bis 14, **dadurch gekennzeichnet, dass** Schaumpartikel verwendet werden, denen bereits ein Wasser abweisender Zusatz zugesetzt wurde, wobei dieser Wasser abweisende Zusatz entweder unterschiedlich vom oder gleich wie der Wasser abweisende Zusatz ist, der dem gebundenen Schaum zugesetzt ist.

16. Das Verfahren nach einem der Ansprüche 8 bis 15, **dadurch gekennzeichnet, dass** die polymeren Schaumpartikel auf Isocyanatbasis so komprimiert werden, dass der hergestellte gebundene Schaum eine Dichte von zwischen 150 und 450 kg/m³ und vorzugsweise von zwischen 200 und 450 kg/m³ hat.

## Revendications

1. Mousse agglomérée comprenant un grand nombre de particules de mousse polymère à base d'isocyanate, en particulier de particules de mousse de polyuréthanne, liées l'une à l'autre au moyen d'un liant à base d'isocyanate, et au moins un additif hydrophobe, **caractérisée en ce que** la mousse agglomérée présente une absorption d'eau, déterminée à 25°C conformément au standard français UEAtc H.1 MOD, de 180 g/m² au maximum et **en ce que** ledit additif hydrophobe comprend une dispersion fluorochimique.

2. Mousse agglomérée suivant la revendication 1, **caractérisée en ce que** ledit additif hydrophobe est appliqué sur la surface des particules de mousse de façon que ces particules de mousse soient tout au plus uniquement partiellement imprégnées de l'additif hydrophobe.

3. Mousse agglomérée suivant la revendication 1 ou 2, **caractérisée en ce que** ledit additif hydrophobe comprend en outre une cire ou une émulsion de cire et/ou une émulsion de siloxane, en particulier une cire.

4. Mousse agglomérée suivant l'une quelconque des revendications 1 à 3, **caractérisée en ce qu'**elle comprend en outre des particules élastomères, en particulier des particules de caoutchouc et/ou de polyuréthanne élastomère, lesquelles particules présentent de préférence un diamètre de 0,05 à 2 mm et très avantageusement un diamètre inférieur à 1mm.

5. Mousse agglomérée suivant l'une quelconque des revendications 1 à 4, **caractérisée en ce qu'**elle comprend en outre une matière de remplissage, en particulier de la poudre de liège et/ou des fibres textiles.

6. Mousse agglomérée suivant l'une quelconque des revendications 1 à 5, **caractérisée en ce qu'**elle contient un agent biocide.

7. Mousse agglomérée suivant l'une quelconque des revendications 1 à 6, **caractérisée en ce qu'**elle présente une densité comprise entre 150 et 450 kg/m³, et de préférence entre 200 et 450 kg/m³.

8. Procédé de production d'une mousse agglomérée suivant l'une quelconque des revendications 1 à 7, dans lequel un liant à base d'isocyanate, comportant des groupes NCO libres, est appliqué sur un grand nombre de particules de mousse polymère à base d'isocyanate, les particules de mousse, présentant le liant appliqué sur elles, sont comprimées et le liant est amené à réagir avec un composé réactif vis-à-vis de groupes NCO pour lier les particules de mousse l'une à l'autre, **caractérisé en ce qu'**au moins un additif hydrophobe, qui comprend une dispersion fluorochimique, est incorporé dans la mousse agglomérée en une quantité telle que la mousse agglomérée présente une absorption d'eau, déterminée à 25°C conformément au standard français UEAtc H.1 MOD1, de 180 g/m² au maximum.

9. Procédé suivant la revendication 8, **caractérisé en ce que** l'additif hydrophobe est appliqué sur la surface des particules de mousse polymère de façon que ces particules de mousse soient tout au plus seulement partiellement imprégnées de l'additif hydrophobe.

10. Procédé suivant la revendication 8 ou 9, **caractérisé en ce que** l'additif hydrophobe est mélangé au liant avant application de ce liant sur les particules de mousse.

11. Procédé suivant l'une quelconque des revendications 8 à 10, **caractérisé en ce que** l'additif hydrophobe est pulvérisé sous forme liquide sur les particules de mousse avant, après et/ou simultanément à l'application du liant.

12. Procédé suivant l'une quelconque des revendications 8 à 11, **caractérisé en ce que** l'additif hydrophobe comprend en outre une cire ou une émulsion de cire et/ou une émulsion de siloxane, en particulier une cire.

13. Procédé suivant l'une quelconque des revendications 8 à 12, **caractérisé en ce qu'**on fait usage de particules de mousse ayant un diamètre de 2 à 20 mm et de préférence de 3 à 5 mm.

14. Procédé suivant l'une quelconque des revendications 8 à 13, **caractérisé en ce qu'**au moins une matière solide, en particulier une matière de remplissage telle que de la poudre de liège et/ou des fibres textiles et/ou une matière élastomère, comme des particules de caoutchouc et/ou de polyuréthanne élastomère, sont incorporées dans la mousse agglomérée par leur mélange avec les particules de mousse, de préférence avant application du liant.

15. Procédé suivant l'une quelconque des revendications 8 à 14, **caractérisé en ce qu'**on fait usage de particules de mousse comportant déjà un additif hydrophobe incorporé dedans, lequel additif hydrophobe est soit différent de l'additif hydrophobe qui est incorporé dans la mousse agglomérée, soit le même.

16. Procédé suivant l'une quelconque des revendications 8 à 15, **caractérisé en ce que** les particules de mousse polymère à base d'isocyanate sont comprimées de telle manière que la mousse agglomérée produite présente une densité comprise entre 150 et 450 kg/m³, et de préférence entre 200 et 450 kg/m³.
